# EUROPEAN PATENT APPLICATION

(11) **EP 2 053 238 A1**
(43) Date of publication of application: **29.04.2009**
(21) Application number: 08251523.0
(22) Date of filing: 25.04.2008
(51) Int. Cl.: F03D 3/00, F03D 3/04

(54) **Wind plant**

(30) Priority: 25.10.2007 BR PI0704438
(71) Applicant: Koury, Nelson, 22610-190 Rio de Janeiro RJ (BR)
(72) Inventor: Koury, Nelson, 22610-190 Rio de Janeiro RJ (BR)
(74) Representative: Burt, Matthew Thomas

(57) **Abstract**

The present invention relates to an easy-to-build wind plant that is capable of generating electricity in a clean, economical and practical manner without causing environmental impact. Said plant comprises an airfoil (2); a tail unit having a rudder (4) connected to the airfoil and arranged so as to capture the wind deviated from it; skirts (3) that extend from the airfoil (2); at least one roller (1) of substantially elongated blades that are arranged substantially parallel to the longitudinal axis of the aerofoil (2) and that is drivable by the wind; an electric generator (13) that receives the rotary motion from the roller (1); wherein the entire set is arranged on a rotary plateau (8) and aligns with the direction of the wind captured by the steering rudder (4).

## Description

The present invention relates to a high-performance wind plant for the clean generation of electricity with optimized efficiency and no environmental impact.

### Description of the Prior Art

Traditionally, the conversion of wind energy into electric energy is done by wind turbines, or machines that basically consist of an electric generator integrated to a windmill axis.

However, these wind turbines knowingly cause some problems, such as technical limitations, given the impossibility of providing a large sail area to capture the wind in a simple manner.

Another aspect with regard to the existing wind turbines lies in the impact caused in the airspace in addition to the risk of hurting or killing birds and insects, which for environmentalists constitutes one of the major disadvantages of these systems, causing also undesired ecological imbalance.

### Summary of the Invention

Thus, the main object of the present invention is to provide an instrument for generating electricity from wind, the capture area of which is not limited by technical infeasibility reasons and also to enable the construction of a sail area in a simple and feasible manner.

The object is to provide a wind plant producing totally clean energy without affecting ecological balance and without any impact on the air network.

In accordance with a second embodiment of the present invention, the plant can be built on a modular basis, so as to enable the addition of new elements with a view to increase the energy-generating capacity as the demand increases.

The present invention reaches these objectives by means of a wind plant comprising an airfoil, a tail unit having an aeronautical steering rudder positioned so as to receive the wind that was deviated by the airfoil, side skirts suspended from the airfoil ends, which further comprises at least one substantially elongated roller consisting of at least four blades arranged below and substantially parallel to the longitudinal axis of the airfoil, which is driven by the wind and transmits the rotary motion directly or indirectly to a generator. The set described above can rotate around a vertical axis on a rotary plateau, so as to align with the direction of the wind captured by the steering rudder.

In another embodiment of the present invention, the roller can further comprise six or eight blades and the airfoil comprises a protection area for the blades when they are rotating in the opposite direction from the wind.

In addition, the roller's rotary motion is transmitted to the generator by means of a set of crown, chain and pinion or any other type of suitable gear.

Preferably the set is supported by wheels on the side skirts in addition to the central rotary support and by one or more wheels in the steering rudder, which are arranged so as to enable the circular movement of the entire structure.

The rudder can include a means to regulate the angle of incidence of the leading edge of the airfoil in relation to the wind.

### Brief Description of the Drawings

The present invention will be further described in more details based on one example of execution represented in the drawings. The figures show:
Figure 1 is a perspective view of a wind plant according to the present invention;

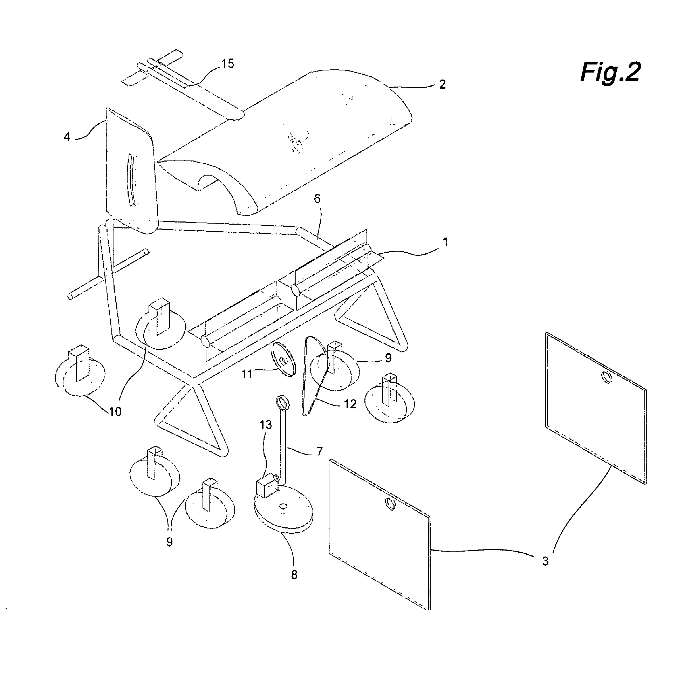

Figure 2 is an exploded perspective view of the wind plant according to the present invention, showing each one of its constituent elements; and
Figure 3 is a side view of the wind plant that is the subject of the present invention.

### Detailed Description of Drawings

As shown in the drawings, which clearly illustrate all the elements that form the wind plant of the present invention, it consists of a structure 6, which can be of any size, depending on the intended demand, and produced from any suitable materials that meet the needed requirements, such as resistance and durability, being preferably non-pollutant materials.

Thus, depending on the project and on the amount of intended electricity, several materials, such as wood, fabrics, plastic or metals can be employed.

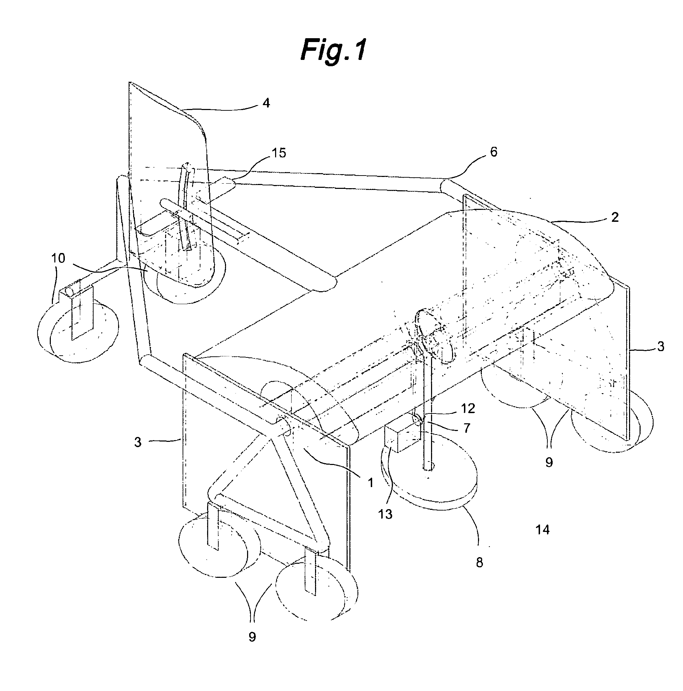

The structure shown in Figure 1 comprise an airfoil 2, preferably arranged on top of the entire set, which is targeted to direct the wind to an aeronautical steering rudder 4 arranged on a tail unit and jointly connected to the airfoil, arranged so as to capture the wind directed by the airfoil.

Thus, the wind blowing on the steering rudder 4 will guide it and consequently the entire plant set that, arranged on a rotary plateau 8 in relation to a surface 14, will be rotated to be exposed to the most favorable angle of incidence of the wind.

Said rotary plateau 8 supports the plant by means of a central support 7 in the form of a substantially vertical mast.

Still with regard to the steering rudder, a means for adjusting the inclination angle 15, such as an elevator, is provided, which, depending on the incident wind, will result in an automatic regulation equation, so that the tail unit can go up or down according to the strength of the wind. Thus, the angle of attack of the airfoil is changed to capture more wind when the wind is weak and protect the structure in case of stronger winds, such as in the case of a hurricane.

At least one side skirt 3 is suspended from each one of the side ends of the airfoil 2, which substantially extends close to the surface 14. This construction results in a wind tunnel formed by the airfoil 2, the side skirts 3 and the surface 14. The effect of this construction consists in preventing the wind from flowing down the sides so as to produce its direction, which is popularly called "draft".

Both said side skirts 3 and the plant's tail unit, wherein said steering rudder 4 is arranged are preferably supported by at least one wheel. In the preferred embodiment of the present invention, each one of the skirts has a pair of wheels 9, and the tail unit also has a pair of wheels 10, all arranged so as to enable the circular movement of the structure 6.

In addition, a roller 1 substantially elongated and parallel to the longitudinal axis of the aerofoil is arranged inside said wind tunnel, which has at least four blades, also elongated and arranged in the longitudinal, direction, parallel to the roller's axis. Alternatively, six or eight blades can be used in roller 1.

Said roller 1 is arranged in such a way that the directed wind blows on it causing its rotation. In order to facilitate the rotation of the roller, the airfoil 1 has a frontal protection zone, protecting the blades that rotate against the wind and consequently enabling the exposure only of the blades of the roller that rotate in the direction of the wind, which provides more effective wind capture. Therefore, an aerodynamic pressure zone similar to the one occurring in the so-called "ground effect" is created, in which the air flow around a body is interrupted by the ground.

Finally, in order to generate the intended electricity, the roller 1 transmits the rotary motion to a generator 13, which can consist, for instance, of an alternator or a dynamo. Thus, mechanical energy is transformed into electrical energy by means known by any person skilled in the art.

Preferably, the rotary motion is transmitted from the roller to the generator, by means of a set formed by a crown 11, chain and pinion 12. However, the generator may be arranged immediately under the airfoil, adjacent and directly engaged to the roller 1, so as to spare the use of other transmission means that involve a loss of energy.

However, it should be noted that the installation of the generator 13 on the base does not significantly affect the plant's results, since the efficiency of the plant is substantially high and, for ease of maintenance and enhanced structural lightness, it is preferable that the generator is arranged next to the base of the set.

### Operation of the Plant of the Present Invention

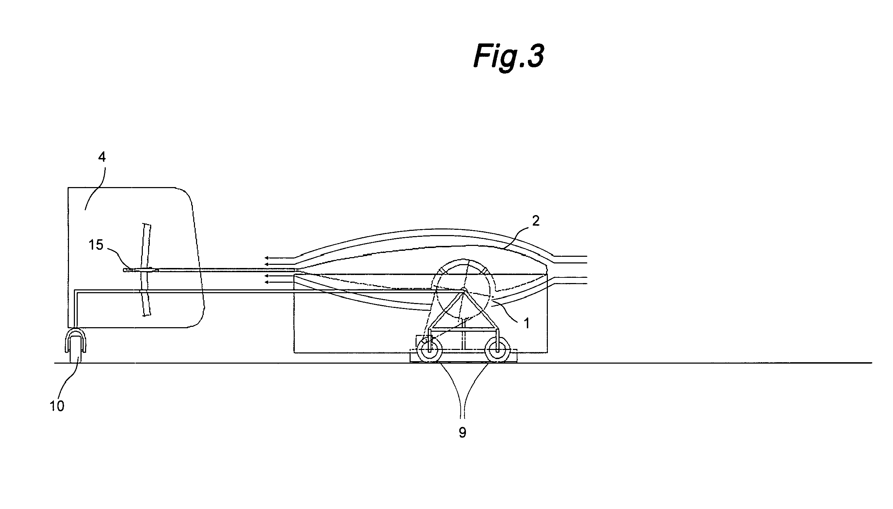

Finally, Figure 3 depicts the principle of operation of the present invention, in which the lines of action of the wind upon the airfoil are shown, as well as on the roller 1 and on the rudder 4 and the elevator 15.

Once installed, the wind plant of the present invention receives the incident wind. When going through the airfoil 2, the wind is deviated in the direction of the rudder 4, which is displaced so as to be aligned with the direction of the wind. Consequently, the entire structure 6 is arranged in an optimized position to receive the incident wind, since it can be rotated around a central axis on the rotary plateau 8.

The elevator 15, in turn, adjusts the angle of incidence to regulate the position of the airfoil 2 and harness the wind with maximum efficiency.

Then, the wind goes under the airfoil 2, blows on the blades of the roller 1 making it rotate, and the protection area existing in the airfoil 2 prevents said wind from blowing on the blades that are moving in the opposite direction from the wind.

The rotation of the roller 1 is transmitted to an electricity-generating means, such as an alternator 13, by means of a set of suitable gears, for instance, crown, chain and pinion. The alternator 13 is arranged on said rotary plateau. Thus, the generated electricity is transmitted and/or stored by suitable means, known in the prior art.

It should be understood that the inventive concept that enables the clean generation of electricity can be embodied in different ways, the embodiment described above being only an example of a preferred one. The use of additional models of rollers with wheels is totally feasible so as to increase the productive capacity of the plant at any given time.

Having described examples of the invention with reference to its preferred embodiments, it is to be understood that the scope of the present invention embraces other possible variations, being limited solely by the appended claims.

## Claims

1. A wind plant **characterized by** comprising:
an airfoil (2), a tail unit having a rudder (4) connected to the airfoil and arranged so as to capture the wind deviated from it,
skirts (3) that extend from the airfoil (2),
at least one roller (1) of substantially elongated blades substantially arranged parallel to the longitudinal axis of the airfoil (2) and drivable by the wind;
an electric generator (13) that receives the rotary motion from the roller (1);
wherein the entire set is arranged on a rotary plateau (8) and is aligned with the direction of the wind captured by the steering rudder (4).

2. A wind plant according to claim 1, **characterized in that** the airfoil comprises a frontal protection area covering part of the roller (1) in order to prevent the blades from rotating against the wind.

3. A wind plant according to claim 1 or 2, **characterized in that** the rudder (4) comprises a means for regulating the angle of incidence (15) that enables the tail unit to go up and down depending on the strength of the wind.

4. A wind plant according to any one of claims 1 to 3, **characterized in that** the skirts (3) consist of at least two skirts perpendicularly suspended from each one of the side ends of the airfoil (2) and extend downward substantially close to a support surface (14) for the plant.

5. A wind plant according to any of claims 1 to 4, **characterized in that** each one of the skirts (3) and the tail unit is supported by at least one wheel (9, 10) in order to enable the circular motion of the set.

6. A wind plant according to claim 5, **characterized in that** each one of the skirts is supported by two wheels (9), and the tail unit is supported by two wheels (10).

7. A wind plant according to any one of claims 1 to 6, **characterized in that** the roller (1) is arranged below the airfoil (2) with at least four blades.

8. A wind plant according to any one of claims 1 to 7, **characterized in that** the roller (1) transmits a rotary motion to the generator (13) by means of a transmission set formed by crown (11), chain and pinion (12).

9. A wind plant according to any one of claims 1 to 7, **characterized in that** the roller (1) is directly connected to the generator (13).

10. A wind plant according to claim 8 or 9, **characterized in that** the generator (13) consists of an alternator or a dynamo.
